# EUROPÄISCHE PATENTSCHRIFT

(11) **EP 4 232 500 B1**
(45) Veröffentlichungstag und Bekanntmachung des Hinweises auf die Patenterteilung: **03.07.2024**
(21) Anmeldenummer: 21769956.0
(22) Anmeldetag: 30.08.2021
(51) Int. Cl.: C08G 65/26, C08G 18/48

(54) **VERFAHREN ZUR HERSTELLUNG VON POLYETHERALKOHOLEN MIT NIEDRIGEM METALLIONEN-GEHALT**
METHOD FOR THE PREPARATION OF POLYETHER ALCOHOLS HAVING A LOW METAL ION CONTENT
PROCÉDÉ DE FABRICATION D'ALCOOLS POLYÉTHÉRAUX À FAIBLE TENEUR EN IONS MÉTALLIQUES

(30) Priorität: 20.10.2020 EP 20202793
(43) Veröffentlichungstag der Anmeldung: 30.08.2023
(73) Patentinhaber: Clariant International Ltd, 4132 Muttenz (CH)
(72) Erfinder: LAUBER, Markus, 63225 Langen (DE); VYBIRAL, Reinhard, 84508 Burgkirchen (DE); BRAND, Stefan, 69493 Hirschberg-Leutershausesn (DE); WACHSEN, Olaf, 84518 Garching (DE); KLEMM, Elias, 70569 Stuttgart (DE); LANGE, Thomas, 09221 Neukirchen (DE)
(74) Vertreter: Clariant Produkte (Deutschland) GmbH
(86) Internationale Anmeldenummer: PCT/EP2021/073841
(87) Internationale Veröffentlichungsnummer: WO 2022/083926

(56) Entgegenhaltungen:
- WO-A1-2007/135154
- DE-A1-102010 039 090
- Asyikin Mohd ET AL: "Effects of Catalyst Concentration and Residence Time on Transesterification of Palm Oil with Methanol Using a 1.0 mm ID Millichannel Reactor", Nihon Enerugi Gakkaishi, 20. Mai 2017 (2017-05-20), Seiten 153-156, XP055792413, DOI: 10.3775/jie.96.153 Gefunden im Internet: URL:https://www.jstage.jst.go.jp/article/j ie/96/5/96_153/_pdf/-char/en [gefunden am 2021-04-01]

## Beschreibung

Die Erfindung betrifft ein Verfahren zur Herstellung von Polyetheralkoholen mit niedrigem Metallionen-Gehalt, das in mikrostrukturierten Reaktoren abläuft. Polyetheralkohole können Polyetherpolyole oder auch Polyethermonoole sein. Diese kommen in unterschiedlichen Anwendungsfeldern zum Einsatz, insbesondere als grenzflächenaktive Substanzen, Wasch und Reinigungsmittel, im Bergbau, in der Bauchemie, als Ölfeldchemikalien, in der Textil- oder Lederbearbeitung, als Beschichtungen, als Formulierungshilfsstoffe für Pflanzenschutzmittel, als Kosmetika und Körperpflegeprodukte, als Formulierungshilfsstoffe für menschliche und tierische Ernährung, für Pigmente, für Arzneimittel oder als Kraftstoffadditive. Auch in der Herstellung von Polyurethanen werden Polyetheralkohole eingesetzt.

Neben der Herstellung in konventionellen Batch-Reaktoren ist auch die Herstellung von Polyetheralkoholen in kontinuierlicher Weise in Reaktoren, die mehrere, parallel zueinander angeordneten Lagen beinhalten, die mikrostrukturiert sind, bekannt. Mikrostrukturierte Reaktoren umfassen Kapillaren, in denen eine chemische Reaktion stattfindet.

EP-A 1 586 372 beschreibt einen mikrostrukturierten Reaktor und dessen Verwendung in einem Verfahren zur Herstellung von Polyetheralkoholen durch ringöffnende Anlagerung von kurzkettigen Alkylenoxiden in Gegenwart eines festen Katalysators, wobei die chemische Prozessführung in Räumen stattfindet, die von zwei oder mehreren im Wesentlichen planparallelen Platten oder Schichten gebildet werden, und wobei die Eduktvermischung einphasig flüssig in jedem Reaktionskanal einzeln erfolgt, eine Wärmetauschervorrichtung vorgesehen ist und der Reaktor bei Drücken bis zu 800 bar und Temperaturen im Bereich von 30 bis 400 °C ausgelegt ist. Dadurch kann das Potential möglichst hoher Reaktionsgeschwindigkeiten durch hohe Alkylenoxiddrücke optimal ausgenutzt und Polyetheralkohole einheitlicher Qualität und mit niedrigem Gehalt an Nebenprodukten hergestellt werden.

DE-A-10 2010 039 090 lehrt ein Verfahren zur Herstellung von Polyetheralkoholen durch Umsetzung der folgenden Edukte:
a) ein oder mehrere Alkylenoxide und gegebenenfalls Kohlendioxid sowie
b) ein oder mehrere H-funktionelle Startsubstanzen, in Gegenwart eines Katalysators,
unter Ausbildung einer flüssigen Reaktionsmischung, in einer Reaktionseinheit (1), das dadurch gekennzeichnet ist, dass die Reaktionseinheit (1) Einbauten (2) aufweist, die eine Vielzahl von mikrostrukturierten Strömungskanälen ausbilden, die ein vielfaches Aufsplitten der flüssigen Reaktionsmischung in Teilströmungspfade und erneutes Rekombinieren derselben in geänderter Anordnung bewirken, wobei das Vielfache Aufsplitten und erneute Rekombinieren vielfach wiederholt wird und wobei die mikrostrukturierten Strömungskanäle eine charakteristische Dimension, die als größtmöglicher Abstand eines beliebigen Teilchens der flüssigen Reaktionsmischung zu der dem Teilchen nächstliegenden Wand eines Strömungskanals definiert wird, im Bereich von 20 bis 10.000 µm aufweisen, und dadurch das Strömungsprofll der flüssigen Reaktionsmischung durch die mikrostrukturierten Strömungskanäle einer idealen Pfropfenströmung annähern.

WO-2007/135154 lehrt ein Verfahren zur Herstellung von Polyetherpolyolen durch Umsetzung der folgenden Edukte:
a) ein oder mehrere Alkylenoxide und gegebenenfalls Kohlendioxid sowie
b) ein oder mehrere H-funktionelle Startsubstanzen,
in Gegenwart eines Katalysators, in einer Reaktionseinheit mit mehreren parallel zueinander angeordneten Lagen A, B, die mikrostrukturiert sind, dergestalt, dass jede Lage eine Vielzahl von parallel zueinander angeordneten Kanälen aufweist, die von einer Seite der Platte bis zur gegenüberliegenden Seite derselben einen durchgehenden Strömungsweg ausbilden, das dadurch gekennzeichnet ist, dass für die Kanäle der Lagen A an einem Ende derselben eine Verteileinrichtung für die Zuführung der Edukte und des Katalysators und am anderen Ende derselben eine Sammeleinrichtung für das Reaktionsgemisch vorgesehen ist.

Mikrostrukturierte Reaktoren sind jedoch sehr diffizile Gebilde. Bereits bei der Fertigung sind die Toleranzen so, dass speziell für Reaktionssysteme mit merklich ansteigender Viskosität über die Reaktionsdauer, wie dies der Fall bei der Herstellung von Polyetheralkoholen ist, der Druckverlust der einzelnen Kapillaren untereinander zu einer Maldistribution der Massenströme führt. Diese Problematik ist bei C. Amador et al. in Chem. Eng. J. 101 (2004) 1-3, Seiten 379-390 ausführlich dargestellt. Die Vermeidung von Maldistributionen bei Parallelschaltung von Rohrapparaten wurde bereits in den 80er Jahren versucht. Es wurden Ansätze entwickelt, welche auch bei viskositätsaufbauenden Systemen eine Gleichverteilung der Massenströme fördern. So wie bei der Zuführung zum mikrostrukturierten Reaktor die Druckverluste der einzelnen Kapillaren zu beachten sind, muss dieser Effekt auch bei der Nachdosierung berücksichtigt werden.

Darüber hinaus bedingt das Verfahren zur Herstellung von Polyetheralkoholen sehr hohe Drücke, die zu einer Reaktorauslegung von bis zu mehreren hundert bar zwingen.

Hessel et. al. berichten, dass sich unter Anwendung neuer Prozessfenster eine Umstellung der Prozessführung von der heute üblichen, durch Wärme- und Stofftransportlimitierung begrenzten effektiven Kinetik, zur intrinsischen Kinetik der Reaktion bewirken lässt. Hessel et. al. definieren hierzu die vorher allgemein als "drastische Reaktionsbedingungen" bezeichnete Art, Reaktionen ablaufen zu lassen, mit dem Begriff "neue Prozessfenster" [HESSEL, V.: Novel Process Windows - Gates to Maximizing Process Intensification via Flow Chemistry. In: Chemical Engineering & Technology 32 (2009), Nr. 11, Seiten 1655-1681; ILLG, T.; LÖB, P. ; HESSEL, V.: Flow chemistry using milli- and microstructured reactors - From conventional to novel process windows. In: Bioorganic & Medicinal Chemistry 18 (2010), Nr. 11, Seiten 3707-3719. -HESSEL, V.; CORTESE, B.; CROON, M.H.J.M. de: Novel process windows - Concept, proposition and evaluation methodology, and intensified superheated processing. In: Chemical Engineering Science 66 (2011), Nr. 7, Seiten 1426-1448]. Die neuen Prozessfenster eröffnen neue Möglichkeiten, Reaktionsprozesse durchzuführen:
- chemische Reaktionen, die mit konventioneller Reaktionstechnik nicht kontrollierbar und somit nicht nutzbar sind
- Reaktionsrouten bei stark erhöhter Temperatur
- Reaktionsrouten bei stark erhöhtem Druck
- Reaktionsrouten bei stark erhöhter Konzentration, bzw. ohne Lösemittel
- Prozessintegration zur Gesamtoptimierung chemischer Verfahren
- Reaktionsrouten im Explosionsbereich oder Reaktionen, die thermisch durchgehen

Ziel der Anwendung der neuen Prozessfenster ist eine Verschiebung der Reaktionsdauer vieler Reaktionen vom Bereich 100 s bis 1.000 s in den einstelligen Sekundenbereich. Hessel et. al. führen in ihren Publikationen einige EU-Initiativen an, die zum Ziel haben die chemische Produktion unter Anwendung der neuen Prozessfenster nachhaltiger, kostengünstiger und flexibler zu gestalten.

Allen bekannten Verfahren und Anwendungen von neuen Prozessfenster gemein ist das Ziel einer Beschleunigung der Reaktion durch Ausnutzung der intrinsischen Kinetik und Eliminierung von Einschränkungen des Masse- und Wärmetransports. Allen bekannten Verfahren und Anwendungen von neuen Prozessfenstern ebenfalls gemein ist eine nachgelagerte Aufarbeitung der hergestellten Produkte.

Speziell bei Nutzung von Polyetheralkoholen für die Herstellung von Polyurethanen ist ein niedriger Gehalt an Metallionen im Endprodukt ein wesentliches Qualitätskriterium, das über die Verwendbarkeit des Endprodukts entscheidet. Alkalimetallhydroxide oder Alkalimetallalkoholate werden bei der Herstellung von Polyetheralkoholen üblicherweise in höheren Konzentrationen, von 100 bis 50.000 ppm, bezogen auf das Gesamtgewicht der Einsatzstoffe, als Katalysatoren verwendet. Um einen niedrigen Metallionengehalt im Endprodukt gewährleisten zu können schließt sich üblicherweise eine Aufarbeitung zur Entfernung dieser basischen Katalysatoren an die Polyetheralkohol-Herstellung an. Die Polyetheralkohole werden neutralisiert und das Metallsalz oder -hydroxide aus dem Polyetheralkohole entfernt. Die Neutralisation erfolgt in der Regel mit wässrigen organischen oder anorganischen Säuren wie z.B. CO₂, Schwefelsäure, Phosphorsäure, Salzsäure, Milchsäure, Essigsäure oder ähnlichen Verbindungen. Die gebildeten Salze werden dann entweder ausgefällt und durch Filtration oder Zentrifugation oder in wässriger Phase durch lonentauscher oder Coalescer abgetrennt. An die Abtrennung schließt sich in der Regel eine Trocknung der Polyetheralkohole an, bei der bei Temperaturen zwischen 80 und 160°C bei reduziertem Druck von 5-500 mbar und bei Bedarf unter Zusatz eines Schleppgases wie Wasserdampf oder Stickstoff das Restwasser entfernt, und der Polyetheralkohol von störenden Verunreinigungen wie Geruchsstoffen etc. befreit wird. Dieser letzte Aufarbeitungsschritt wie für die Entfernung von Geruchsstoffen wird in der Regel auch bei Katalysatoren angewandt, die nicht aus der Reaktionsmischung entfernt werden müssen. Solche Katalysatoren sind z.B. DMC-Katalysatoren oder Amine, z.B. Imidazole, Dimethylalkanolamine oder andere metallfreie Katalysatoren.

Es war folglich Aufgabe der vorliegenden Erfindung, ein Verfahren zur Herstellung von Polyetheralkoholen unter basischer Metallkatalyse in einem kontinuierlich betriebenen Reaktor zur Verfügung zu stellen, das gegenüber bekannten Verfahren dahingehend verbessert ist, dass die kosten- und energieintensive Aufarbeitung der Polyetheralkohole zur Entfernung des metallhaltigen Katalysators entfällt. Die dadurch erhaltenen Produkte sollen direkt für Anwendungen im Polyurethanbereich verwendet werden können. Hierfür ist eine Obergrenze des Metallgehalts von 20 ppm einzuhalten. Die geringe Reaktionsgeschwindigkeit, die durch die dafür erforderliche geringe Katalysatorkonzentration verursacht wird, ist dabei zu kompensieren.

Die vorliegende Erfindung betrifft daher ein Verfahren zur Herstellung von Polyetheralkoholen durch Umsetzung von einem oder mehreren Alkylenoxiden und einer oder mehrerer H-funktioneller Startsubstanzen in einem kontinuierlich betriebenen Reaktor, der Strömungskanäle umfasst, bei einer Temperatur von 180 C bis 250 °C und einem Druck von 60 bis 150 bar in Gegenwart eines metallhaltigen Katalysators, wobei die als Metallanteil angegebene Konzentration des Katalysators, bezogen auf die Gesamtmenge an Reaktionsgemisch aus Alkylenoxid, H-funktioneller Startsubstanz und Katalysator nicht mehr als 20 Gew.-ppm beträgt, und die Verweilzeit des Reaktionsgemischs im Reaktor von 15 bis 120 Minuten beträgt.

Als Alkylenoxide kommen alle Oxirane in Betracht. Bevorzugt werden Ethylenoxid, Propylenoxid, Butylenoxid, Pentenoxid, Glycidylether, Hexenoxid und/oder Styroloxid, besonders bevorzugt Ethylenoxid, Propylenoxid und Mischungen hiervon eingesetzt.

Die H-funktionelle Startsubstanz ist eine Verbindung mit in Bezug auf die Alkoxylierung mindestens einem aktiven Wasserstoffatom. Als H-funktionelle Startsubstanz dienen bevorzugt Alkohole mit einer Funktionalität von 1 bis 8, bevorzugt von 2 bis 8, besonders bevorzugt von 2 bis 6, weiter bevorzugt von 2 bis 4. Unter Funktionalität wird die Zahl der OH-Gruppen pro mol der Startsubstanz verstanden.

Bevorzugte H-funktionelle Startsubstanzen mit einer Funktionalität größer 1 sind beispielsweise Ethylenglykol, Propylenglykol, Diethylenglykol, Dipropylenglykol, Glycerin, Trimethylolpropan, Pentaerythrit, Sucrose, Saccharose, Glucose, Fructose, Mannose, Sorbitol, hydroxyalkylierte (Meth)acrylsäurederivate, sowie alkoxylierte Derivate der vorstehend aufgeführten H-funktionellen Startsubstanzen bis zu einem Molgewicht von etwa 1500 D.

Als H-funktionelle Startsubstanz können auch ein oder mehrere Alkohole mit einer Funktionalität von 1 mit der allgemeinen Formel R-OH eingesetzt werden, wobei R ein Alkyl-, Alkenyl-, Aryl-, Aralkyl oder Alkylarylrest mit 1 bis 60, vorzugsweise 1 bis 24 Kohlenstoffatomen ist. Als Alkylarylreste sind solche mit C₁- bis C₁₅-Alkylgruppen bevorzugt. Besonders bevorzugt sind beispielsweise Methanol, Butanol, Hexanol, Heptanol, Octanol, Decanol, Undecanol, Dodecanol oder Tridecanol, Tetradecanol, Pentadecanol, Hexadecanol, Heptadecanol, Octadecanol, Butenol, Hexenol, Heptenol, Octenol, Nonenol, Decenol, Undecenol, Vinylalkohol, Allylalkohol, Geraniol, Linalool, Citronellol, Phenol oder Nonylphenol.

Darüber hinaus können auch primäre und/oder sekundäre Amine sowie Thiole als Starter dienen. Möglich ist auch der Einsatz von Verbindungen, die sowohl OH als auch Allyl- oder Vinylgruppen enthalten, zum Beispiel Vinyl- oder (Meth)Allylalkohol und deren Veretherungsprodukte mit mehrwertigen Alkoholen, die in einer nachgeschalteten radikalischen Polymerisation als Ausgangsprodukte dienen können.

Als Katalysatoren können vorzugsweise Alkali- oder Erdalkalimetallhydroxide, bevorzugt Natriumhydroxid, Kaliumhydroxid und Caesiumhydroxid, sowie auch andere basische Katalysatoren, wie Alkalialkoholate eingesetzt werden. Neben löslichen basischen Katalysatoren können auch unlösliche basische Katalysatoren, wie Magnesiumhydroxid oder Hydrotalcit verwendet werden.

Die als Metallanteil angegebene Konzentration der Katalysatoren liegt für Alkalimetallhydroxide und Alkalimetallalkoholate für das erfindungsgemäße Verfahren vorzugsweise im Bereich von 1 bis 50 ppm, insbesondere bei 5 bis 30 ppm, besonders bevorzugt bei 5 bis 20 ppm, bezogen auf das Gesamtgewicht des Reaktionsgemischs. "Als Metallanteil angegeben" bedeutet, dass zur Berechnung der Katalysatorkonzentration nur das Gewicht des im Katalysator enthaltenen Metalls berücksichtigt wird, nicht jedoch das Gewicht von beispielsweise Hydroxiden oder Alkoholaten.

Das Verfahren wird in der Weise betrieben, dass der Druck in den Strömungskanälen im Bereich von 60 bis 150, insbesondere 80 bis 120 bar beträgt

Das Verfahren wird in der Weise betrieben, dass die Temperatur in den Strömungskanälen im Bereich von 180 bis 250 °C, insbesondere 190 bis 230°C beträgt.

Das Verfahren wird in der Weise betrieben, dass die Verweilzeit des Reaktionsgemisches in den Strömungskanälen zwischen 15 und 120 Minuten, vorzugsweise 20 bis 100 Minuten beträgt.

Es ist sowohl möglich, nur ein einziges Alkylenoxid als Edukt einzusetzen, als auch mehrere Alkylenoxide. Hier kommt sowohl eine blockweise Anlagerung, bei der die Alkylenoxide einzeln nacheinander angelagert werden, oder eine statistische Anlagerung, bei der die Alkylenoxide gemeinsam zudosiert werden, in Frage. Möglich sind auch Mischformen, wobei sowohl Blöcke als auch statistische Abschnitte in die Polyetherkette eingebaut werden. Die Edukte werden bevorzugt in einem Verhältnis von 1 bis 300 Äquivalente eines oder mehrerer Alkylenoxide pro Äquivalent eines oder mehrerer H-funktioneller Startsubstanzen eingesetzt.

Vorzugsweise wird ein Teil der Edukte oder werden alle Edukte und gegebenenfalls der Katalysator zunächst außerhalb der Strömungskanäle des Reaktors vorvermischt, wobei sichergestellt wird, dass die Temperatur bei der Vorvermischung kleiner ist als die Temperatur der anschließenden Umsetzung. Temperatur und Druck während der Mischung sind außerdem so zu wählen, dass das Mischgut flüssig ist.

Bevorzugt wird ein mikrostrukturierter Mischer als außerhalb des Reaktors angeordneter Mischer eingesetzt, worin ein Teil der Edukte oder alle Edukte und gegebenenfalls der Katalysator vorvermischt werden. Mikrostrukturierte Mischer umfassen Kapillaren, in denen die Mischung stattfindet. Hierfür eignen sich beispielsweise laminare Diffusionsmischer, Multilaminationsmischer, Mikromischer mit strukturierten Wänden oder Split-Recombine-Mischer.

Bei den laminaren Diffusionsmischern erfolgt die Vermischung von Teilströmen des Fluids, das an einer Mikrostruktur in eine Vielzahl mikroskopisch kleiner Strömungslamellen mit einer Dicke im Bereich von 10 bis 2000 µm, oder auch 20 bis 1000 µm oder auch 40 bis 500 µm aufgefächert wurde, ausschließlich durch molekulare Diffusion senkrecht zur Hauptströmungsrichtung. Eine überschlagsmässige Auslegung des Mischers kann über die Fourier-Zahl Fo = τ/τD erfolgen. Liegt die Verweilzeit τ mindestens in der Größenordnung der Diffusionszeit τD für die transversale Vermischung, d.h. besitzt die Fourier-Zahl mindestens den Wert 1, erzielt man am Ausgang des Mischers nahezu vollständige molekulare Vermischung.

Laminare Diffusionsmischer können als einfache T- oder Y-Mischer oder als so genannte Multilaminationsmischer ausgeführt sein. Beim T- oder Y-Mischer werden die beiden zu mischenden Teilströme durch eine T- oder Y-förmige Anordnung einem Einzelkanal zugeführt. Maßgebend für den transversalen Diffusionsweg SDiff ist hierbei die Kanalweite δκ. Für typische Kanalweiten zwischen 100 µm und 1 mm ergeben sich für Gase sehr kleine Mischzeiten von weniger als 100 ms, wohingegen diese bei Flüssigkeiten im Minutenbereich liegen. Im Fall des Mischens von Flüssigkeiten, wie im Falle des vorliegenden Verfahrens, ist es vorteilhaft, den Mischvorgang zusätzlich, beispielsweise durch strömungsinduzierte Quervermischung, zu unterstützen.

Bei Multilaminationsmischern werden die zu vermischenden Teilströme in einem Verteiler in eine Vielzahl von Stromfäden geometrisch vereinzelt und am Austritt des Verteilers dann alternierend in Lamellen der Mischstrecke zugeführt. Bei Flüssigkeiten erreicht man mit den klassischen Multilaminationsmischern Mischzeiten im Sekundenbereich. Da dies für manche Anwendungen (z.B. bei schnellen Reaktionen) nicht ausreichend ist, wurde das Grundprinzip dahingehend weiterentwickelt, dass die Strömungslamellen nochmals zusätzlich geometrisch oder hydrodynamisch fokussiert werden. Bei der geometrischen Fokussierung geschieht dies durch eine Verengung in der Mischstrecke und bei der hydrodynamischen Fokussierung durch zwei Seitenströme, die den Hauptstrom senkrecht anströmen und so die Strömungslamellen weiter komprimieren. Durch die beschriebene Fokussierung lassen sich laterale Abmessungen der Strömungslamellen von wenigen Mikrometern realisieren, so dass selbst Flüssigkeiten innerhalb von einigen 10 ms gemischt werden können.

Bei Mikromischern mit strukturierten Wänden sind sekundäre Strukturen auf den Kanalwänden angeordnet, beispielsweise Riefen oder Stege, in einem bestimmten Winkel zur Hauptströmungsrichtung, bevorzugt von 45° oder 90°.

Split-Recombine-Mischer zeichnen sich durch Stufen aus wiederkehrender Trennung und Zusammenführung von Strömen aus. Bei jeder dieser Stufen wird die Lamellenzahl sukzessive verdoppelt und dadurch Lamellendicke und Diffusionsweg halbiert. Die Verweilzeit in der Verfahrensstufe der Vorvermischung liegt bevorzugt im Bereich von 1 bis 300 Sekunden.

Die vorvermischten Edukte werden einem Reaktor zugeführt, der vorzugsweise mehrere parallele, alternierend übereinander angeordnete und mikrostrukturierte Lagen von Reaktionskanälen und Temperierkanälen enthält, dergestalt, dass jede Lage eine Vielzahl von parallel zueinander angeordneten Kanälen aufweist, die von einer Seite der Lage bis zur gegenüberliegenden Seite derselben einen durchgehenden Strömungsweg ausbilden.

Hierbei wird als Lage eine weitgehend zweidimensionale, flächige Baueinheit verstanden, das heißt eine Baueinheit, deren Dicke im Verhältnis zu ihrer Fläche vernachlässigbar gering ist. Bevorzugt handelt es sich hierbei um eine im Wesentlichen ebene Platte.

Die Lagen, insbesondere Platten, in Reaktor und Mischer sind mikrostrukturiert, indem sie Kanäle aufweisen, die von Reaktionsgemisch (so genannte Reaktionskanäle) bzw. Wärmeträger (so genannte Temperierkanäle) durchströmt sind. Unter dem Begriff mikrostrukturiert wird, wie üblich verstanden, dass der mittlere hydraulische Durchmesser der Kanäle < 1 mm ist.

Der Reaktor kann in einer Ausführungsform Lagen A und Lagen B umfassen. Dann sind alternierend zu den vom Reaktionsgemisch durchströmten Lagen A Lagen B angeordnet, denen auf einer Seite ein Wärmeträger zugeführt und auf der anderen Seite derselben abgezogen wird. Hierbei ist es möglich, dass die alternierende Anordnung der Lagen A und B dergestalt ausgebildet ist, dass auf jede Lage A jeweils eine Lage B folgt, oder dass auf jeweils zwei aufeinander folgende Lagen A eine Lage B folgt oder dass auf jeweils zwei aufeinander folgende Lagen B jeweils eine Lage A folgt.

Die Lagen A enthalten die Strömungskanäle des Reaktors. Die hier für die Lage A beschriebenen Ausführungsformen treffen auf die Ausführung des Reaktors im Allgemeinen auch dann zu, wenn dieser keine Lagen A und B, sondern nur Lagen A umfasst.

Nach Vorvermischen eines Teils oder aller Edukte wird das hierbei erhaltene Gemisch und gegebenenfalls zusätzliche, hiermit nicht vermischte Edukte, den Kanälen in den Lagen A auf einer Seite derselben zugeführt und auf der anderen Seite derselben das Reaktionsgemisch abgezogen.

Erfindungsgemäß ist für die Kanäle der Lagen A an einem Ende derselben eine Verteilereinrichtung für die Zuführung der Edukte und des Katalysators und am anderen Ende derselben eine Sammeleinrichtung für das Reaktionsgemisch vorgesehen.

In einer Ausführungsform ist die Verteil- und Sammeleinrichtung jeweils als eine außerhalb oder innerhalb des Stapels der Lagen A, B angeordnete Kammer ausgebildet. Hierbei können die Wände der Kammer gerade oder beispielsweise halbkreisförmig gebogen sein. Wesentlich ist, dass die geometrische Form der Kammer geeignet ist, Strömung und Druckverlust so zu gestalten, dass eine gleichmäßige Durchströmung aller nachfolgender Kanäle erreicht wird.

In einer Ausführungsform sind die Verteil- und Sammeleinrichtungen jeweils innerhalb des Stapels der Lagen A, B angeordnet, indem die parallel zueinander angeordneten Kanäle jeder Lage A im Bereich jeder der beiden Enden derselben jeweils einen, die parallel zueinander angeordneten Kanäle verbindenden Querkanal aufweisen und alle Querkanäle innerhalb des Stapels der Lagen A, B durch einen im Wesentlichen senkrecht zur Ebene der Lagen A, B angeordneten Sammelkanal verbunden sind. Es gilt für diese Kanäle der gleiche Grundsatz der Gleichverteilung, wie im vorigen Absatz dargelegt.

In einer Ausführungsform ist auch für die Lagen B, deren Kanäle vom Wärmeträger durchströmt werden, jeweils eine Verteil- und Sammeleinrichtung entsprechend der Verteil- und Sammeleinrichtung für die Lagen A vorgesehen.

Es ist vorteilhaft, das Verfahren in der Weise durchzuführen, dass entlang der Kanäle jeder Lage A ein Temperaturprofil durchlaufen wird, in dem pro Lage zwei oder mehrere Heiz- oder Kühlzonen mit jeweils mindestens einer Verteil- und Sammeleinrichtung pro Heiz- oder Kühlzone der Lagen B zur entsprechenden Temperierung des Reaktionsgemisches in den Kanälen der Lagen A vorgesehen sind.

Das erfindungsgemäße Verfahren zeichnet sich insbesondere durch eine Vermeidung bzw. Minimierung der Aufarbeitung der hergestellten Polyetheralkohole, im Sinne der Entfernung des Katalysators, Neutralisation und Entfernung von Geruchsstoffen aus. Dadurch ist es möglich auf beispielsweise die Entfernung der Alkali- oder Erdalkalimetallionen zu verzichten, wodurch die strengen Anforderungen an Polyetheralkohole mit Einsatz beispielsweise im Automotive- und Polyurethanbereich in Bezug auf den Metallionengehalt schon mit der Rohware erfüllt werden.

### Ausführungsbeispiele:

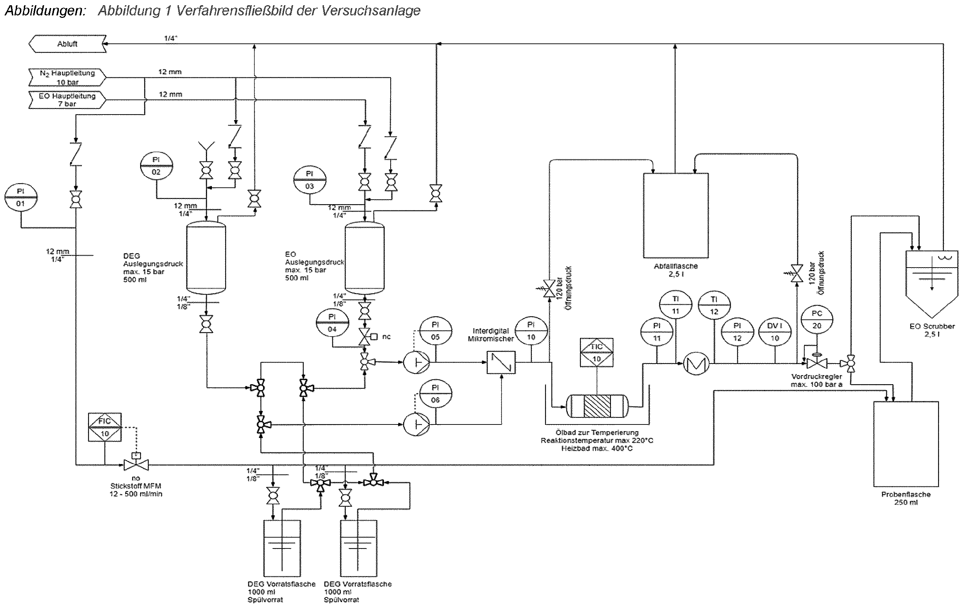

Für die Ausführungsbeispiele wurde eine kontinuierlich betriebene Strömungsapparatur aufgebaut (Abb. 1). Die Versuchsanlage ist dabei für 100 bar (Absolutdruck) ausgelegt, um zu gewährleisten, dass Ethylenoxid auch bei Temperaturen bis 220 °C im Reaktor flüssig bleibt. Bei der Untersuchung der Reaktionen kam dabei ein einfacher Strömungsrohrreaktor zum Einsatz. Der Strömungsrohrreaktor bestand dabei aus einem Edelstahlrohr mit 3 mm Außendurchmesser mit 1,6 mm Innendurchmesser (Fa. Swagelok 50 m Länge, womit 100 ml Innenvolumen realisiert werden konnten).

Die Versuchsanlage verfügt über 2 Druckvorlagen (Fa. Büchi, Auslegungsdruck 15 bar abs., siehe Abbildung 1) mit 500 ml Volumen für die Bereitstellung von EO und DEG. Beide Vorlagen können mit Stickstoff aus einer Hausleitung (10 bar) beaufschlagt werden, um genügend Vordruck für zwei HPLC-Pumpen bereitzustellen und zu vermeiden das EO durch die Hubbewegungen der Kolben ausgast. Bei Blasenbildung in den Kolben der HPLC-Pumpe besteht die Möglichkeit, dass die Pumpe keine Flüssigkeit mehr fördert. Zum Spülen der EO-Pumpe kann die DEG-Druckvorlage auch auf diese Pumpe geschaltet werden. Zwei weitere Normaldruckvorlagen mit jeweils einem Liter Volumen stehen ebenfalls zur Verfügung, zum Spülen der Pumpen.

Im Anschluss an die Pumpen werden beide Stoffströme in einem Interdigitalmischer (Fa. Ehrfeld Mikrotechnik) gemischt und anschließend in den Reaktor geleitet. Nach dem Reaktor wird über einen Wärmetauscher (Fa. Ehrfeld Mikrotechnik) der Produktstrom gekühlt. Ein Druckregler (KPB-Serie, Fa.Swagelok) erlaubt die Einstellung des Anlagendrucks bis 137 bar. Drei Drucksensoren (Fa. Keller in Modulen von Ehrfeld Mikrotechnik) erlauben die Erfassung und Aufzeichnung des Drucks vor dem Reaktor, vor dem Wärmetauscher und vor dem Druckregler der Versuchsanlage.

Zur Absicherung der Anlage sind vor dem Reaktor und vor dem Druckregler je ein Überströmventil (Fa. Swagelok) verbaut die auf 120 bar abs eingestellt sind. Dadurch ist gewährleistet, dass im Falle einer Verstopfung im Reaktor oder im Bereich des Druckreglers, selbst bei Versagen der automatischen Abschaltung der HPLC-Pumpen (max. Druck 120 bar) eine Druckentlastung der Anlage möglich ist. Der Reaktor wird über ein geregeltes Heizbad auf Temperatur gehalten in welches der Reaktor eingetaucht ist. Zur Erfassung und Aufzeichnung der Temperatur des Produktstroms sind vor und nach dem Wärmetauscher je eine Pt-100 Thermoelement-Module (Fa. Ehrfeld Mikrotechnik) verbaut.

### Beispiel 1:

Substrat: Diethylenglycol (DEG)
Katalysator: Natriumhydroxid 50%ige wässrige Lösung
Katalysatorkonzentration: 0,0155% (Gew. % bezogen auf DEG)
Dosierrate DEG + Katalysator: 0,64 ml/min; Dosierrate EO: 2,03 ml/min
Reaktortemperatur: 210 °C
Druck: 95 bar abs
Verweilzeit: 45 min

### Beispiel 2:

- Substrat: Diethylenglycol (DEG)
   Katalysator: Natriumhydroxid 50%ige wässrige Lösung
   Katalysatorkonzentration: 0,0155% (Gew. % bezogen auf DEG)
   Dosierrate DEG + Katalysator: 0,82 ml/min; Dosierrate EO: 2,6 ml/min
   Reaktortemperatur: 220 °C
   Druck: 95 bar abs
   Verweilzeit: 35 min

### Beispiel 3

- Substrat: Diethylenglycol (DEG)
   Katalysator: Natriumhydroxid 50%ige wässrige Lösung
   Katalysatorkonzentration: 0,0155% (Gew. % bezogen auf DEG)
   Dosierrate DEG + Katalysator: 1,15 ml/min; Dosierrate EO: 3,65 ml/min
   Reaktortemperatur: 230 °C
   Druck: 95 bar abs
   Verweilzeit: 25 min

### Beispiel 4

- Substrat: Diethylenglycol (DEG)
   Katalysator: Natriumhydroxid 50%ige wässrige Lösung
   Katalysatorkonzentration: 0,0155% (Gew. % bezogen auf DEG)
   Dosierrate DEG + Katalysator: 1,15 ml/min; Dosierrate EO: 3,64 ml/min
   Reaktortemperatur: 220 °C
   Druck: 95 bar abs
   Verweilzeit: 25 min

### Beispiel 5

Substrat: Diethylenglycol (DEG)
Katalysator: Natriumhydroxid 50%ige wässrige Lösung
Katalysatorkonzentration: 0,0155% (Gew. % bezogen auf DEG)
Dosierrate DEG + Katalysator: 0,64 ml/min; Dosierrate EO: 2,03 ml/min
Reaktortemperatur: 220 °C
Druck: 95 bar abs
Verweilzeit: 45 min

### Beispiel 6

- Substrat: Diethylenglycol (DEG)
   Katalysator: Natriumhydroxid 50%ige wässrige Lösung
   Katalysatorkonzentration: 0,0155% (Gew. % bezogen auf DEG)
   Dosierrate DEG + Katalysator: 0,48 ml/min; Dosierrate EO: 1,52 ml/min
   Reaktortemperatur: 220 °C
   Druck: 95 bar abs
   Verweilzeit: 45 min

### Beispiel 7

- Substrat: Diethylenglycol (DEG)
   Katalysator: Natriumhydroxid 50%ige wässrige Lösung
   Katalysatorkonzentration: 0,155% (Gew. % bezogen auf DEG)
   Dosierrate DEG + Katalysator: 1,15 ml/min; Dosierrate EO: 3,64 ml/min
   Reaktortemperatur: 180 °C
   Druck: 95 bar abs
   Verweilzeit: 25 min

| Beispiel | Temperatur | Verweilzeit | NaOH (50%ig) | Metallanteil | Natrium im Produkt | Ethylenoxid Im Produkt |
|---|---|---|---|---|---|---|
| | τ / °C | τ / min | [Gew. % bezogen auf DEG] | [ppm] | [ppm] | [ppm] |
| 1 | 210 | 45 | 0,0155 | 44,6 | 13 | 1000 |
| 2 | 220 | 35 | 0,0155 | 44,6 | 21 | 23 |
| 3 | 230 | 25 | 0,0155 | 44,6 | 14 | 2000 |
| 4 | 220 | 25 | 0,0155 | 44,6 | 21 | 8000 |
| 5 | 220 | 45 | 0,0155 | 44,6 | 12 | 1 |
| 6 | 220 | 60 | 0,0155 | 44,6 | 12 | < 0,5 |
| 7 (V) | 180 | 25 | 0,155 | 446 | 120 | 200 |

Der EO Gehalt im Produkt gibt an wie vollständig die Reaktion abläuft. Vorzugsweise soll nach der Reaktion möglichst wenig oder kein EO mehr vorhanden sein, da dieses toxisch/explosiv ist und bei höheren Konzentrationen gegebenenfalls entfernt werden muss. Weiterhin ist ein vollständiger Umsatz erwünscht damit die Stöchiometrie stimmt und die niedrigen Metall-Ionen Gehalte bezogen auf die Masse des Endproduktes erreicht werden.

Kleinere Verweilzeiten < 600 s führen zu einer unvollständigen Reaktion, und hätten zur Konsequenz, dass nicht abreagiertes Ethylenoxid aus dem Reaktor ausgeschleust wird. Dieses Ergebnis wurde experimentell erhalten. Ethylenoxid ist ein toxisches / explosives Gas. Aus sicherheitstechnischen Gründen sollte solch ein Versuch nicht durchgeführt werden. Aufgrund der unvollständigen Reaktion und dem gasförmigen Reaktand Ethylenoxid wäre auch keine sinnvolle analytische Auswertung des Versuchs möglich.

## Patentansprüche

1. Verfahren zur Herstellung von Polyetheralkoholen durch Umsetzung von einem oder mehreren Alkylenoxiden mit einer oder mehreren H-funktionellen Startsubstanzen in einem kontinuierlich betriebenen Reaktor, der Strömungskanäle umfasst, bei einer Temperatur von 180 bis 250°C und einem Druck von 60 bis 150 bar in Gegenwart eines basischen, metallhaltigen Katalysators, wobei die die als Metallanteil angegebene Konzentration des Katalysators, bezogen auf die Gesamtmenge an Reaktionsgemisch aus Alkylenoxid, H-funktioneller Startsubstanz und Katalysator nicht mehr als 50 Gew.-ppm beträgt, und die Verweilzeit des Reaktionsgemischs im Reaktor von 15 bis 120 Minuten beträgt.

2. Verfahren nach Anspruch 1, worin Hydroxide oder Alkoholate von Alkali- und/oder Erdalkalimetallen, vorzugsweise von Natrium oder Kalium, als Katalysator verwendet werden.

3. Verfahren nach Anspruch 1 oder 2, worin die als Metallanteil angegebene Konzentration des Katalysators 1 bis 50 ppm, insbesondere 5 bis 30 ppm, besonders bevorzugt 5 bis 20 ppm beträgt.

4. Verfahren nach einem oder mehreren der Ansprüche 1 bis 3, worin die Summe der Konzentration von Na-Ionen und K-Ionen im Polyetheralkohol maximal 30 ppm, vorzugsweise maximal 20 ppm, besonders bevorzugt 10 ppm beträgt.

5. Verfahren nach einem oder mehreren der Ansprüche 1 bis 4, worin der Reaktor mehrere parallele, alternierend übereinander angeordnete und mikrostrukturierte Lagen von Reaktionskanälen und Temperierkanälen enthält.

6. Verfahren nach einem oder mehreren der Ansprüche 1 bis 5, worin Druck und Temperatur so gewählt sind, dass das Reaktionsgemisch zu jeder Zeit flüssig bleibt.

7. Verfahren nach einem oder mehreren der Ansprüche 1 bis 6, worin die Verweilzeit des Reaktionsgemisches im Reaktor zwischen 20 und 100 Minuten liegt.

8. Verfahren nach einem oder mehreren der Ansprüche 1 bis 7, worin entlang der Strömungsachse des Reaktors ein Temperaturprofil durchlaufen wird, und der Reaktor zwei oder mehrere Heiz- oder Kühlzonen mit mindestens einer Verteil- und mindestens einer Sammeleinrichtung pro Heiz- oder Kühlzone umfasst.

9. Verfahren nach einem oder mehreren der Ansprüche 1 bis 8, worin das Alkylenoxid ausgewählt ist aus Ethylenoxid, Propylenoxid, Butylenoxid, Pentenoxid, Glycidylether, Hexenoxid und Styroloxid, bevorzugt Ethylenoxid, Propylenoxid, und Mischungen hiervon.

10. Verfahren nach einem oder mehreren der Ansprüche 1 bis 9, worin die H-funktionelle Startsubstanz einen Alkohol mit einer Funktionalität von 1 bis 8 umfasst.

11. Verfahren nach einem oder mehreren der Ansprüche 1 bis 10, worin die H-funktionelle Startsubstanz ein Alkoxylat ist, das Einheiten von Ethylenoxid und Einheiten von Propylenoxid enthält.

12. Verfahren nach Anspruch 11, in dem die Einheiten von Ethylenoxid und Einheiten von Propylenoxid blockweise angeordnet sind.

13. Verfahren nach einem oder mehreren der Ansprüche 1 bis 10, worin die H-funktionelle Startsubstanz einen Alkohol mit einer Funktionalität von 1 umfasst, der der allgemeinen Formel R-OH entspricht, wobei R ein Alkyl-, Alkenyl-, Aryl-, Aralkyl oder Alkylarylrest mit 1 bis 60, vorzugsweise 1 bis 24 Kohlenstoffatomen ist.

14. Verfahren nach Anspruch 13, in dem die H-funktionelle Startsubstanz ausgewählt ist aus Methanol, Butanol, Hexanol, Heptanol, Octanol, Decanol, Undecanol, Dodecanol, Tridecanol, Tetradecanol, Pentadecanol, Hexadecanol, Heptadecanol, Octadecanol, Butenol, Hexenol, Heptenol, Octenol, Nonenol, Decenol, Undecenol, Vinylalkohol, Allylalkohol, Geraniol, Linalool, Citronellol, Phenol und Nonylphenol.

15. Verfahren nach einem oder mehreren der Ansprüche 1 bis 10, worin die H-funktionelle Startsubstanz einen oder mehrere Alkohole mit einer Funktionalität von 2 bis 8, besonders bevorzugt von 2 bis 6, weiter bevorzugt von 2 bis 4, insbesondere von 2 bis 3 umfasst.

16. Verfahren nach einem oder mehreren der Ansprüche 1 bis 10 und 15, worin die H-funktionelle Startsubstanz einen oder mehrere Alkohole ausgewählt aus Ethylenglykol, Propylenglykol, Diethylenglykol, Dipropylenglykol, Glycerin, Trimethylolpropan, Pentaerythrit, Sucrose, Saccharose, Glucose, Fructose, Mannose, Sorbitol, hydroxyalkylierte (Meth)acrylsäurederivate, sowie alkoxylierte Derivate der vorstehend aufgeführten H-funktionellen Startsubstanzen bis zu einem Molgewicht von 1500 D, vorzugsweise Ethylenglykol, Propylenglykol, Glycerin, Trimethylolpropan und Pentaerytrit umfasst.

17. Verfahren nach einem oder mehreren der Ansprüche 1 bis 16, worin dem Reaktor ein Mischer vorgeschaltet ist.

18. Verfahren nach Anspruch 17, in dem der Mischer ein außerhalb des Reaktors angeordneter, mikrostrukturierter Mischer ist.

19. Verfahren nach einem oder mehreren der Ansprüche 1 bis 18, worin als Katalysatoren basische Katalysatoren eingesetzt werden.

20. Verfahren nach einem oder mehreren der Ansprüche 1 bis 19, worin der Katalysator ein Alkali- oder Erdalkalimetallhydroxid und/oder Alkalialkoholat umfasst.

21. Verfahren nach einem oder mehreren der Ansprüche 1 bis 20, worin der Katalysator aus Natriumhydroxid, Kaliumhydroxid und Caesiumhydroxid ausgewählt ist.

22. Verfahren nach einem oder mehreren der Ansprüche 1 bis 21, worin der Katalysator in einer Konzentration von 5 bis 30 ppm, besonders bevorzugt bei 5 bis 20 ppm, bezogen auf das Gesamtgewicht des Reaktionsgemischs, vorhanden ist.

## Claims

1. Process for producing polyether alcohols by reaction of one or more alkylene oxides with one or more H-functional starter substances in a continuously operated reactor comprising flow channels at a temperature of 180°C to 250°C and a pressure of 60 to 150 bar in the presence of a basic, metal-containing catalyst, wherein the concentration of the catalyst reported as the metal content, based on the total amount of reaction mixture composed of alkylene oxide, H-functional starter substance and catalyst, is not more than 50 ppmw and the residence time of the reaction mixture in the reactor is from 15 to 120 minutes.

2. Process according to Claim 1, wherein hydroxides or alkoxides of alkali metals and/or alkaline earth metals, preferably of sodium or potassium, are used as the catalyst.

3. Process according to Claim 1 or 2, wherein the concentration of the catalyst reported as the metal content is 1 to 50 ppm, in particular 5 to 30 ppm, particularly preferably 5 to 20 ppm.

4. Process according to one or more of Claims 1 to 3, wherein the sum of the concentrations of Na ions and K ions in the polyether alcohol is at most 30 ppm, preferably at most 20 ppm, particularly preferably 10 ppm.

5. Process according to one or more of Claims 1 to 4, wherein the reactor contains a plurality of parallel, alternatingly superposed and microstructured layers of reaction channels and temperature-control channels.

6. Process according to one or more of Claims 1 to 5, wherein the pressure and temperature are chosen such that the reaction mixture remains liquid at all times.

7. Process according to one or more of Claims 1 to 6, wherein the residence time of the reaction mixture in the reactor is between 20 and 100 minutes.

8. Process according to one or more of Claims 1 to 7, wherein the flow axis of the reactor follows a temperature profile and the reactor comprises two or more heating or cooling zones having at least one distributing means and at least one collecting means per heating or cooling zone.

9. Process according to one or more of Claims 1 to 8, wherein the alkylene oxide is selected from ethylene oxide, propylene oxide, butylene oxide, pentene oxide, glycidyl ether, hexene oxide and styrene oxide, preferably ethylene oxide, propylene oxide and mixtures thereof.

10. Process according to one or more of Claims 1 to 9, wherein the H-functional starter substance comprises an alcohol having a functionality of 1 to 8.

11. Process according to one or more of Claims 1 to 10, wherein the H-functional starter substance is an alkoxylate containing units of ethylene oxide and units of propylene oxide.

12. Process according to Claim 11, in which the units of ethylene oxide and units of propylene oxide are arranged blockwise.

13. Process according to one or more of Claims 1 to 10, wherein the H-functional starter substance comprises an alcohol having a functionality of 1 and conforming to the general formula R-OH, wherein R is an alkyl-, alkenyl-, aryl-, aralkyl or alkylaryl radical having 1 to 60, preferably 1 to 24, carbon atoms.

14. Process according to Claim 13, in which the H-functional starter substance is selected from methanol, butanol, hexanol, heptanol, octanol, decanol, undecanol, dodecanol, tridecanol, tetradecanol, pentadecanol, hexadecanol, heptadecanol, octadecanol, butenol, hexenol, heptenol, octenol, nonenol, decenol, undecenol, vinyl alcohol, allyl alcohol, geraniol, linalool, citronellol, phenol and nonylphenol.

15. Process according to one or more of Claims 1 to 10, wherein the H-functional starter substance comprises one or more alcohols having a functionality of 2 to 8, particularly preferably of 2 to 6, more preferably of 2 to 4, in particular of 2 to 3.

16. Process according to one or more of Claims 1 to 10 and 15, wherein the H-functional starter substance is one or more alcohols selected from ethylene glycol, propylene glycol, diethylene glycol, dipropylene glycol, glycerol, trimethylolpropane, pentaerythritol, sucrose, saccharose, glucose, fructose, mannose, sorbitol, hydroxyalkylated (meth)acrylic acid derivatives and alkoxylated derivatives of the abovementioned H-functional starter substances up to a molecular weight of 1500 D, preferably ethylene glycol, propylene glycol, glycerol, trimethylolpropane and pentaerythritol.

17. Process according to one or more of Claims 1 to 16, wherein a mixer is arranged upstream of the reactor.

18. Process according to Claim 17, in which the mixer is a microstructured mixer arranged outside the reactor.

19. Process according to one or more of Claims 1 to 18, wherein basic catalysts are used as the catalyst.

20. Process according to one or more of Claims 1 to 19, wherein the catalyst comprises an alkali or alkaline earth metal hydroxide and/or alkali metal alkoxide.

21. Process according to one or more of Claims 1 to 20, wherein the catalyst is selected from sodium hydroxide, potassium hydroxide and caesium hydroxide.

22. Process according to one or more of Claims 1 to 21, wherein the catalyst is present in a concentration of 5 to 30 ppm, particularly preferably 5 to 20 ppm, based on the total weight of the reaction mixture.

## Revendications

1. Procédé de préparation d'alcools polyalcoxylés par réaction d'un ou plusieurs oxydes d'alkylène avec une ou plusieurs substances de départ à fonctionnalité H dans un réacteur continu, qui comprend des canaux d'écoulement, à une température de 180 à 250 °C et sous une pression de 60 à 150 bar en présence d'un catalyseur métallique basique, la concentration du catalyseur, exprimée par sa proportion en métal par rapport à la quantité totale du mélange réactionnel constitué de l'oxyde d'alkylène, de la substance de départ à fonctionnalité H et du catalyseur, n'étant pas supérieure à 50 ppm en poids, et le temps de séjour du mélange réactionnel dans le réacteur étant de 15 à 120 minutes.

2. Procédé selon la revendication 1, dans lequel on utilise comme catalyseur des hydroxydes ou des alcoolates de métaux alcalins et/ou alcalino-terreux, de préférence de sodium ou de potassium.

3. Procédé selon la revendication 1 ou 2, dans lequel la concentration du catalyseur, exprimée par sa proportion en métal, est de 1 à 50 ppm, en particulier de 5 à 30 ppm, d'une manière particulièrement préférée de 5 à 20 ppm.

4. Procédé selon l'une ou plusieurs des revendications 1 à 3, dans lequel la somme de la concentration des ions Na et des ions K dans l'alcool polyalcoxylé est au maximum de 30 ppm, de préférence au maximum de 20 ppm, d'une manière particulièrement préférée de 10 ppm.

5. Procédé selon l'une ou plusieurs des revendications 1 à 4, dans lequel le réacteur contient plusieurs couches de canaux de réaction et de canaux d'équilibrage de température parallèles, disposées en alternance les unes sur les autres et microstructurées.

6. Procédé selon l'une ou plusieurs des revendications 1 à 5, dans lequel la pression et la température sont choisies de façon que le mélange réactionnel reste liquide à tout instant.

7. Procédé selon l'une ou plusieurs des revendications 1 à 6, dans lequel le temps de séjour du mélange réactionnel dans le réacteur est compris entre 20 et 100 minutes.

8. Procédé selon l'une ou plusieurs des revendications 1 à 7, dans lequel on a le long de l'axe d'écoulement du réacteur un profil de température, et le réacteur comprend deux ou plusieurs zones de chauffage ou de refroidissement, avec au moins un dispositif de répartition et au moins un dispositif de regroupement par zone de chauffage et de refroidissement.

9. Procédé selon l'une ou plusieurs des revendications 1 à 8, dans lequel l'oxyde d'alkylène est choisi parmi l'oxyde d'éthylène, l'oxyde de propylène, l'oxyde de butylène, l'oxyde de pentène, le glycidyléther, l'oxyde d'hexène et l'oxyde de styrène, de préférence l'oxyde d'éthylène, l'oxyde de propylène et les mélanges de ceux-ci.

10. Procédé selon l'une ou plusieurs des revendications 1 à 9, dans lequel la substance de départ à fonctionnalité H comprend un alcool ayant une fonctionnalité de 1 à 8.

11. Procédé selon l'une ou plusieurs des revendications 1 à 10, dans lequel la substance de départ à fonctionnalité H est un alcoxylate, qui contient des motifs oxyde d'éthylène et des motifs oxyde de propylène.

12. Procédé selon la revendication 11, dans lequel les motifs oxyde d'éthylène et les motifs d'oxyde de propylène sont disposés en blocs.

13. Procédé selon l'une ou plusieurs des revendications 1 à 10, dans lequel la substance de départ à fonctionnalité H comprend un alcool ayant une fonctionnalité de 1, qui correspond à la formule générale R-OH, R étant un radical alkyle, alcényle, aryle, aralkyle ou alkylaryle ayant 1 à 60, de préférence 1 à 24 atomes de carbone.

14. Procédé selon la revendication 13, dans lequel la substance de départ à fonctionnalité H est choisie parmi les composés méthanol, butanol, hexanol, heptanol, octanol, décanol, undécanol, dodécanol, tridécanol, tétradécanol, pentadécanol, hexadécanol, heptadécanol, octadécanol, buténol, hexénol, hepténol, octénol, nonénol, décénol, undécénol, alcool vinylique, alcool allylique, géraniol, linalool, citronellol, phénol et nonylphénol.

15. Procédé selon l'une ou plusieurs des revendications 1 à 10, dans lequel la substance de départ à fonctionnalité H comprend un ou plusieurs alcools ayant une fonctionnalité de 2 à 8, d'une manière particulièrement préférée de 2 à 6, plus particulièrement de 2 à 4, en particulier de 2 à 3.

16. Procédé selon l'une ou plusieurs des revendications 1 à 10 et 15, dans lequel la substance de départ à fonctionnalité H comprend un ou plusieurs alcools choisis parmi les composés éthylèneglycol, propylèneglycol, diéthylèneglycol, dipropylèneglycol, glycérol, triméthylolpropane, pentaérythritol, sucrose, saccharose, glucose, fructose, mannose, sorbitol, dérivés hydroxyalkylés de l'acide (méth)acrylique, ainsi que les dérivés alcoxylés des substances de départ à fonctionnalité H mentionnées ci-dessus jusqu'à une masse moléculaire de 1 500 D, de préférence l'éthylèneglycol, le propylèneglycol, le glycérol, le triméthylolpropane et le pentaérytritol.

17. Procédé selon l'une ou plusieurs des revendications 1 à 16, dans lequel un mélangeur est monté en amont du réacteur.

18. Procédé selon la revendication 17, dans lequel le mélangeur est un mélangeur microstructuré disposé à l'extérieur du réacteur.

19. Procédé selon l'une ou plusieurs des revendications 1 à 18, dans lequel on utilise comme catalyseurs des catalyseurs basiques.

20. Procédé selon l'une ou plusieurs des revendications 1 à 19, dans lequel le catalyseur comprend un hydroxyde d'un métal alcalin ou alcalino-terreux et/ou un alcoolate de métal alcalin.

21. Procédé selon l'une ou plusieurs des revendications 1 à 20, dans lequel le catalyseur est choisi parmi l'hydroxyde de sodium, l'hydroxyde de potassium et l'hydroxyde de césium.

22. Procédé selon l'une ou plusieurs des revendications 1 à 21, dans lequel le catalyseur est présent en une concentration de 5 à 30 ppm, d'une manière particulièrement préférée de 5 à 20 ppm, par rapport au poids total du mélange réactionnel.
